# EUROPEAN PATENT APPLICATION

(11) **EP 4 328 941 A1**
(43) Date of publication of application: **28.02.2024**
(21) Application number: 22306248.0
(22) Date of filing: 24.08.2022
(51) Int. Cl.: H01F 27/38, H01F 27/28, H01F 3/10, H02M 1/00, H02M 1/12, H02M 7/493

(54) **MULTIPHASE SYSTEM COMPRISING A POWER CONVERTER WITH AN EI CORE BASED MAGNETICALLY COMPENSATED STRUCTURE**

(71) Applicant: Mitsubishi Electric R & D Centre Europe B.V., 1119 NS Schiphol Rijk (NL); MITSUBISHI ELECTRIC CORPORATION, Chiyoda-ku Tokyo 100-8310 (JP)
(72) Inventor: LEFEVRE, Guillaume, 35700 RENNES (FR); MORAND, Julien, 35700 RENNES (FR)
(74) Representative: Cabinet Le Guen Maillet

(57) **Abstract**

The present invention concerns a multiphase system comprising a power converter having at least two legs and a filtering device connected to the at least two legs of the power converter, the filtering device being composed of at least two inductors, characterized in that the each inductor is composed of turns wounded around a central leg of a respective EI shaped magnetic, each inductor is disposed in at least one printed circuit board that comprises connections of the inductors and in that the filtering device further comprises a conductive material composed of at least two parts, each part goes through each aperture of a respective EI shaped magnetic material, a first terminal of each inductor being respectively connected at one leg of the power converter and one terminal of the conductive material is connected to the second terminals of the inductors.

## Description

### TECHNICAL FIELD

The present invention relates generally to an EI core based magnetically compensated structure

### RELATED ART

Recent advances of semiconductors technology, in particular wide band gap devices (WBG), have opened the field to more compact power electronic systems. Led by better dynamic performances of WBG switches compared to their Silicon counterpart, power converters can now be operated with much higher switching frequencies. This directly comes along alleviated constraints on both inductive and capacitive filtering devices. In conjunction with power converters interleaving techniques that are commonly used for high current applications, the volume and weight of magnetics components has been significantly reduced in the past years. Interleaved structures are composed of parallel cells also named legs. The drive signal of each leg is phase shifted. In particular, the phase shift can be evenly distributed according to the number of legs. If this condition is fulfilled, this structure allows to reduce the output current ripple by a factor of N² (N being the number of legs) due to an apparent frequency of N.Fsw and a HF voltage fictitiously divided by N. This allows to reduce the current rating on the semiconductors by distributing the design constraints over the devices. In interleaved converters with filtered output voltage, the filtering devices represent an important part of the converter weight. Classical solution is to use independent inductors, but such solution imposes an important weight and the magnetic device conception is crucial.

Meanwhile, since no significant improvement has been observed with regards to the magnetic materials, the designer has no other choice than defining the best trade-off between saturation field and core losses.

Conventional inductors involve a DC (Direct current) or LF (low frequency) field component superimposed to a HF (High Frequency) component. Magnetic saturation is the most critical point to address when targeting smaller inductors. It is also obvious that DC/LF and HF magnetic field can be treated independently since the HF induction field B_{HF} evolves irrespective of the magnetic permeability which is not the case of the low frequency or DC induction field B_{DC/LF}.

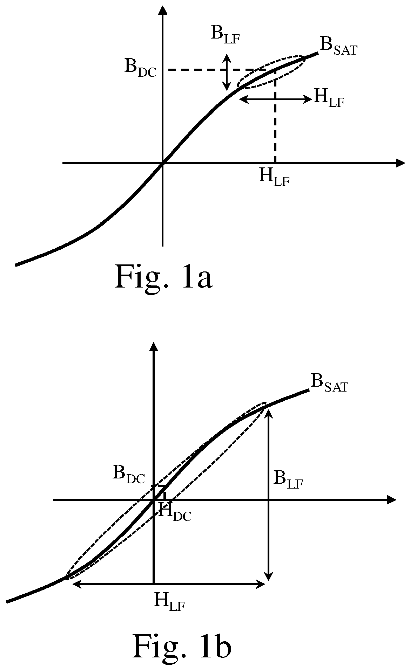

In the example given in Fig. 1a, the magnetization curve of an inductor may lead to a saturation of the induction field.

In Fig. 1a, B_{LF} stands for LF induction field, B_{DC} stands for DC induction field, H_{LF} stands for LF magnetic field and H_{DC} stands for DC magnetic field.

Based on these observations, compensate the LF/DC flux and operate the inductors in two magnetic quadrants is the best option as shown in Fig. 1b. By doing so, the saturation constraints related to the LF/DC field are alleviated which means that the inductor is now designed as a transformer with almost only HF components. One advantage of this solution is to fully decouple the design inductor (apart from the copper losses) from the current flowing through the device. Such demagnetization approach can be performed by magnetically coupling at least two inductors with a similar current flowing through. It is then possible to achieve a reduction of the LF/DC magnetic field by adjusting the coupling factor between the at least two inductors. A very good coupling comes along a reduced B_{LF/DC} value but also a significant increase of the current ripple at N·F_{sw}. (F_{sw} being the switching frequency of the power converter) Indeed, the leakage inductance is the filtering device in charge of filtering the current harmonic at N·F_{sw} flowing in all the legs and a minimum value is mandatory to avoid generating HF losses that may lead to an unacceptable loss level and potentially the breakdown of the filtering device.

### SUMMARY OF THE INVENTION

The present invention aims to provide a filtering device in an interleaved structure of a converter composed of through-output coupled inductors that are designed using PCB based technologies.

To that end, the present invention concerns a multiphase system comprising a power converter having at least two legs and a filtering device connected to the at least two legs of the power converter, the filtering device being composed of at least two inductors, characterized in that the each inductor is composed of turns wounded around a central leg of a respective EI shaped magnetic, each inductor is disposed in at least one printed circuit board that comprises connections of the inductors and in that the filtering device further comprises a conductive material composed of at least two parts, each part goes through each aperture of a respective EI shaped magnetic material, a first terminal of each inductor being respectively connected at one leg of the power converter and one terminal of the conductive material is connected to the second terminals of the inductors.

The present invention also concerns a method for manufacturing a multiphase system comprising a power converter having at least two legs and a filtering device connected to the at least two legs of the power converter, the filtering device being composed of at least two inductors, characterized in that the method comprises the steps of:
- disposing the inductors turns on a least one printed circuit board,
- disposing a conducting material, the conducting material being composed of at least two parts,
- disposing for each inductor an EI shaped magnetic material so that the turns of each inductor are wounded around a central leg of a respective EI shaped magnetic material and each part goes through each aperture of the respective EI shaped magnetic material,
- connecting the filtering device by connecting respectively a first terminal of each inductor to one output of the power converter and connecting one terminal of the conductive material to the second terminals of the inductors.

Thus, in this configuration, the at least two inductors are magnetically coupled through the conductive material for multiple frequencies of N·F_{sw}, N being the number of legs and uncoupled for other frequencies.

According to a particular feature, the filtering device comprises one printed circuit board which comprises the inductors and the conducting material.

Thus, the design can benefit from the cost effective and streamlined PCB process. Also, additional features such as PCB embedded sensors could be implemented in conjunction to the windings on the printed circuit boards.

According to a particular feature, the printed circuit board further comprises plural conducting layers on which the windings of the inductors and the conducting material are etched.

According to a particular feature, the printed circuit board further comprises a laminated layer of soft magnetic material between the conducting layer or layers on which the inductors are etched and the conducting layer or layers on which the conducting material is etched.

Thus, the magnetic coupling between the inductors can be tuned by properly selecting the properties of the laminated layer of soft magnetic material. This is not detrimental to the cost-effectiveness of this solution since the lamination is part of the overall streamlined process of a printed circuit board.

According to a particular feature, the filtering device comprises plural printed circuit boards, a first printed circuit board comprises the inductors and a second first printed circuit board comprises the conducting material.

Thus, the technical parameters of each PCB can be selected to fit at the best of the constraints of the inductors irrespective of those of the conducting material.

### BRIEF DESCRIPTION OF THE DRAWINGS

The characteristics of the invention will emerge more clearly from a reading of the following description of example embodiments, the said description being produced with reference to the accompanying drawings, among which:
Fig. 1a represents a magnetization curve of a filtering device in an interleaved structure of a converter;
Fig. 1b represents a magnetization curve of a filtering device in an interleaved structure of a converter comprising through-output coupled inductors according to the present invention;
Fig. 2 represents an example of realization of an interleaved structure of a converter comprising a filtering device composed of through-output coupled inductors according to the present invention;
Fig. 3 represents a more detailed example of realization of the interleaved structure of a converter comprising a filtering device composed of through-output coupled inductors according to the present invention;
Fig. 4 represents an example of an EI shaped core magnetic structure used in the present invention;
Fig. 5 represents a first example of realization of EI core magnetic structures together with a coupling element that is used for coupling the output current of the interleaved structure converter to the currents into the legs of the interleaved structure converter;
Fig. 6 represents an example of realization of the windings of the inductors Li according to the present invention;
Fig. 7 represents a first example of a through-output coupled inductors according to the invention;
Fig. 8 represents a second example of a through-output coupled inductors according to the invention;
Fig. 9 represents a particular implementation of the second example of a through-output coupled inductors according to the invention;
Fig. 10 represents an architecture of a system for making a filtering device in an interleaved structure of a converter comprising through-output coupled inductors;
Fig. 11 represents an algorithm for making a filtering device in an interleaved structure of a converter comprising through-output coupled inductors.

### DESCRIPTION

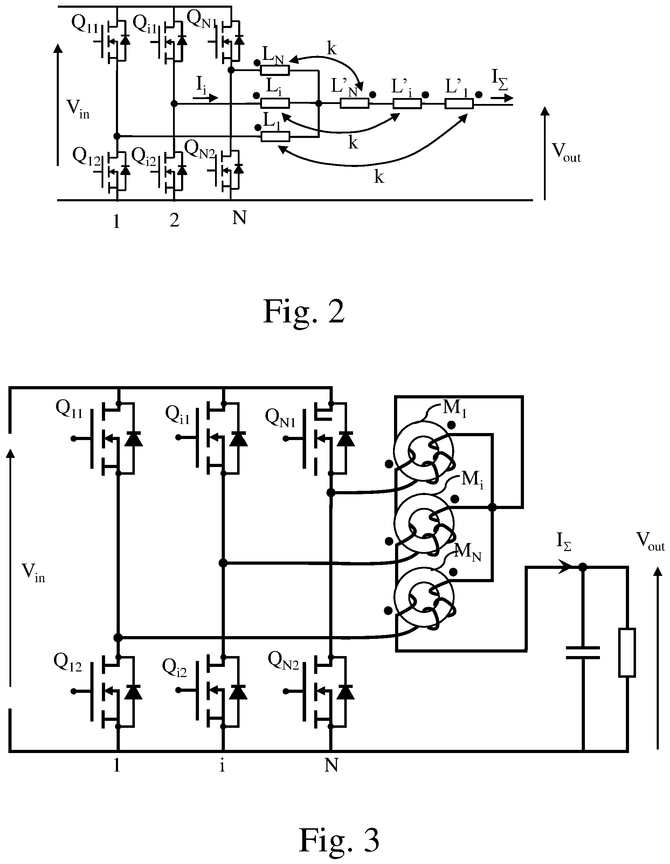

**Fig. 2** represents an example of realization of an interleaved structure of a converter comprising a filtering device according to the present invention.

In the example of Fig. 2, the converter comprises N legs. The switches Q₁₁ and Q₁₂ are switches of the first leg 1 and are connected to a first terminal of an inductor Li.

The switches Qᵢ₁ and Qᵢ₂ are switches of the i-th leg i and are connected to a first terminal of an inductor Lᵢ. The switches Q_{N1} and Q_{N2} are switches of the N-th leg N and are connected to a first terminal of an inductor L_{N}.

The second terminals of the inductors L₁, Lᵢ and L_{N} are connected to a first terminal of an inductor L'_{N}, the second terminal of the inductor L'_{N} is connected to a first terminal of an inductor L'ᵢ and the second terminal of the inductor L'ᵢ is connected to a first terminal of an inductor L'₁. As shown in Fig. 2, the inductors L₁ and L'₁ are magnetically coupled, the inductors Lᵢ and L'ᵢ are magnetically coupled and the inductors L_{N} and L'_{N} are magnetically coupled.

The inductors L'₁, L'ᵢ and L'_{N} are wound with a conducting material.

Each magnetic device, here labelled Lᵢ, is coupled to a part L'ᵢ through which flows the output current I_{Σ}. L'₁, L'ᵢ and L'_{N} are parts of a conductive material.

As the magnetic devices are coupled, this theoretically results in an indirect magnetic coupling between the Lᵢ inductor the part L'ᵢ that also forms an inductor. With this arrangement, only the coupling between one phase and the output conductor has to be managed, adding degree of freedom in the design or releasing the constraints on the layout of the magnetic part. By doing so, the LF/DC magnetic flux can almost be cancelled or partially compensated depending on the turn ratio and the coupling factor.

More precisely, as shown in **Fig. 3****,** the inductors L₁ and L'₁ are magnetically coupled with a magnetic material Mi, the inductors Lᵢ and L'ᵢ are magnetically coupled with a magnetic material Mᵢ and the inductors L_{N} and L'_{N} are magnetically coupled with a magnetic material M_{N}. The magnetic materials M₁ to M_{N} are implemented with a toroidal geometry made with a magnetic material such a ferrite, nanocristallyne or iron powder according to the required level of losses.

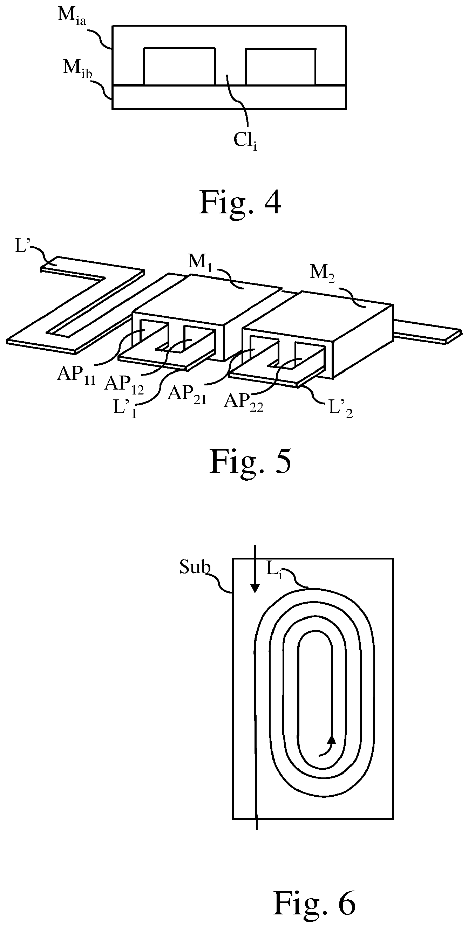

**Fig. 4** represents an example of an EI shaped core magnetic structure used in the present invention.

The magnetic structure Mi, for i=1 to N, is an assembly of a first magnetic structure Mᵢₐ having an E shape and a magnetic structure M_{ic} having an I shape.

The central leg of the magnetic material Mᵢ is noted Clᵢ.

It has to be noted here that the same magnetic shape may be obtained using E shaped magnetic structures, C shaped magnetic structures or a combination of above-mentioned shapes.

**Fig. 5** represents an example of realization of EI core magnetic structures together with a coupling element that is used for coupling the output current of the interleaved structure converter to the currents into the legs of the interleaved structure converter.

In the Fig. 5, two magnetic structures M₁ and M₂ are shown together with the conducting material L' that is composed of a part L'₁ acting as inductor and a part L'₂ acting as inductor.

The conducting material L' is folded in order to enable the part L'₁ acting as an inductor to go through each aperture AP₁₁, AP₁₂, and to enable the part L'₂ acting as an inductor to go through each aperture AP₂₁ and AP₂₂ of the EI shaped magnetic structures M₁ to M₂.

**Fig. 6** represents an example of realization of the windings of the inductors that are connected to each leg of the interleaved structure converter according to the present invention.

The windings of each inductor Lᵢ, with i=1 to N, are realized on substrate Sub that may be a printed circuit board. The windings are realized on a single layer in the example of Fig. 6 but may be realized on plural layers.

The windings of each inductor Lᵢ may be realized on the same printed circuit board or on different printed circuit boards.

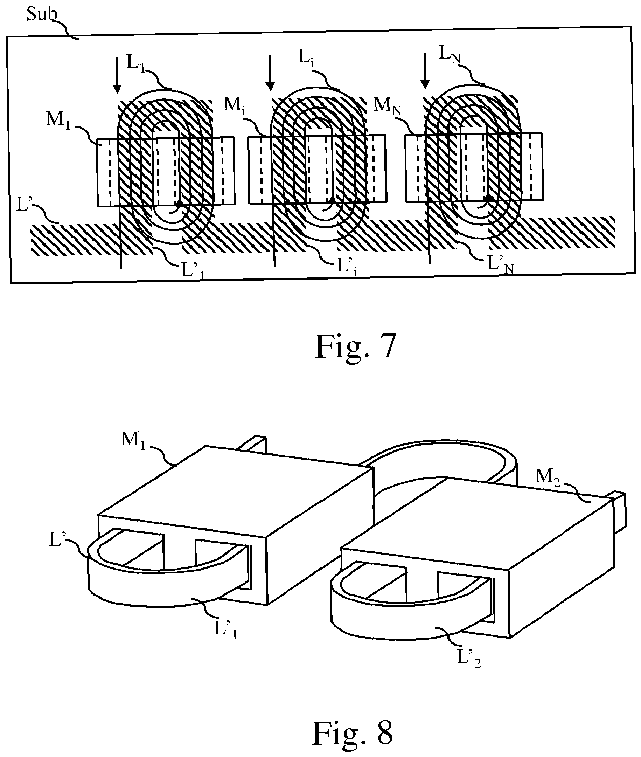

**Fig. 7** represents a first example of a through-output coupled inductors according to the invention.

In the example of Fig. 7, three inductors L₁, Lᵢ and L_{N} are magnetically coupled using the conductor L' that is composed of the part L'₁ acting as inductor, of the part L'₁ acting as inductor and the part L'_{N} acting as inductor and EI shaped magnetic materials M₁, Mᵢ and M_{N}.

In the example of Fig.7, the inductors are placed on the same substrate Sub.

The magnetic material M₁ is placed around the inductor L₁ so that the inductor L₁ is wounded around the central leg Cl₁ of the magnetic material M₁. The substrate comprises apertures for placing the magnetic material M₁.

The magnetic material M_{i]} is placed around the inductor Lᵢ so that the inductor Lᵢ is wounded around the central leg Clᵢ of the magnetic material Mᵢ. The substrate comprises apertures for placing the magnetic material Mᵢ.

The magnetic material M_{N} is placed around the inductor L_{N} so that the inductor L_{N} is wounded around the central leg Cl_{N} of the magnetic material M_{N}. The substrate comprises apertures for placing the magnetic material M₁.

The conducting material L' is folded in order to enable the part, L'₁, L'ᵢ, L'_{N} acting as inductors to go through each aperture of the EI shaped magnetic structures M₁ to M_{N}.

In the example of Fig. 7, the conducting material L' is a folded ribbon.

It has to be noted here that the conducting material L' may be realized on the same printed circuit board Sub as the inductors L₁ to L_{N}.

It has to be noted here that in a practical implementation, the magnetic materials M₁ and M_{N} may be located close to each other, i.e. the through-output coupled inductors may be disposed in a triangular shape in case of three legs or a polygonal shape in case of more than three legs.

Such configuration may enable multiples turns of the conducting material L', i.e. by multiples tracks.

The turns may be on the same printed circuit board Sub or on different printed circuit boards. One turn may be etched on both the internal and external layers of the printed circuit board Sub.

For example, the inductors L₁ to L_{N} and the conducting material L' have the same thickness and are etched on the same substrate. The control of the coupling factor is made by controlling the prepeg thickness of the printed circuit board.

For example, the thickness of the inductors L₁ to L_{N} is different of the thickness of the conducting material L' and is etched on the same substrate. The control of the coupling factor is made by controlling the prepeg thickness of the printed circuit board.

For example, a laminated layer of soft magnetic material may be used to decrease the coupling factor between the inductors L₁ to L_{N} and the conducting material L'.

For example, the density of vias may be used to control the DC resistance.

For example, the inductors L₁ to L_{N} have the same thickness and are etched on the same substrate and the conducting material L' is etched on a different printed circuit board. The control of the leakage inductance is made by controlling the distance between the two printed circuit boards.

Above mentioned example may also be combined.

Then, the coupling factor between the inductors L₁ to L_{N} and the parts L'₁ to L'_{N} can be adjusted by modifying the distance between them. The larger the distance is, the lower the leakage inductance is.

The magnetic field may be adjusted by selecting the equivalent permeability of the leakage paths with magnetic layers.

**Fig. 8** represents a second example of realization of EI core magnetic structures together with a coupling element that is used for coupling the output current of the interleaved structure converter to the currents into the legs of the interleaved structure converter.

In the Fig. 8, two magnetic structures M₁ and M₂ are shown together with the conducting material L'.

The inductor L' is folded in order to enable the part L'1 to go through each aperture AP₁₁, AP₁₂ and to enable the part L'₁ to go through each aperture AP₂₁ and AP₂₂ of the EI shaped magnetic structures M₁ to M₂.

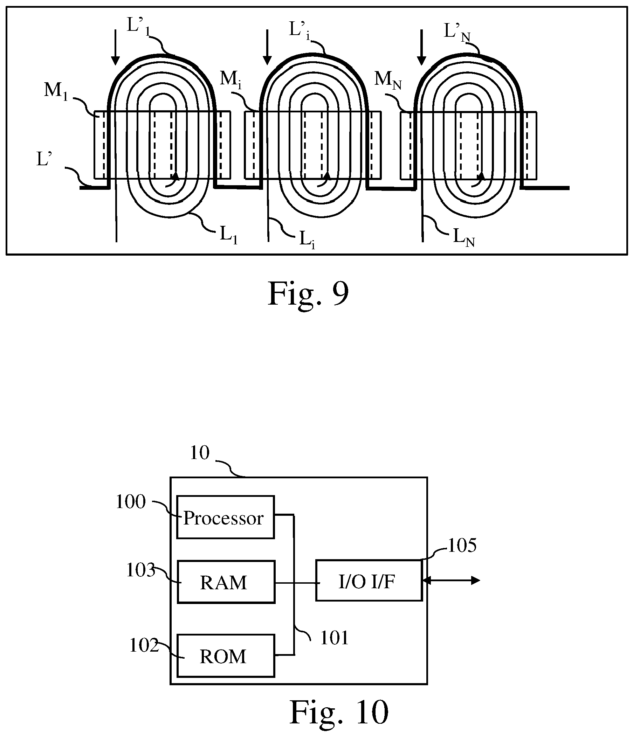

**Fig. 9** represents a particular implementation of the second example of a through-output coupled inductors according to the invention.

The printed circuit board Sub is carved in order to enable the conducting material L' to go through each aperture of the EI shaped magnetic structures M₁, Mᵢ, M_{N}.

**Fig. 10** represents an architecture of a system for making a filtering device in an interleaved structure of a converter comprising through-output coupled inductors.

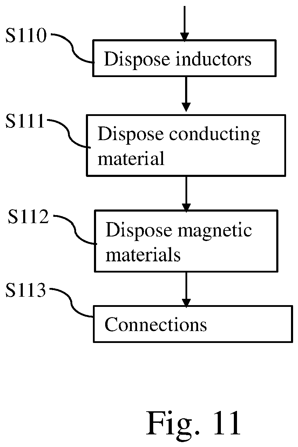

The system 10 has, for example, an architecture based on components connected by a bus 101 and a processor 100 controlled by a program as disclosed in Fig. 11.

The bus 101 links the processor 100 to a read only memory ROM 102, a random access memory RAM 103, an input output I/O IF interface 105.

The input output I/O IF interface 105 enables the control of the different apparatus that are used to produce filtering devices comprising through-output coupled inductors.

The memory 103 contains registers intended to receive variables and the instructions of the program related to the algorithm as disclosed in Fig. 10.

The read-only memory, or possibly a Flash memory 102, contains instructions of the programs related to the algorithm as disclosed in Fig. 10, when the system 10 is powered on, that are loaded to the random access memory 103. Alternatively, the program may also be executed directly from the ROM memory 102.

The system 10 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*)*.*

In other words, the system 10 includes circuitry, or a device including circuitry, causing the system 10 to perform the program related to the algorithm as disclosed in Fig. 10.

**Fig. 11** represents an algorithm for making a filtering device in an interleaved structure of a converter comprising through-output coupled inductors.

The present algorithm discloses a method for manufacturing a multiphase system comprising a power converter having at least two legs and a filtering device connected to the at least two legs of the power converter.

At step S110, the inductors turns are disposed on a least one printed circuit board.

At step S111, the conducting material is disposed. The conducting material is composed of at least two parts.
- At step S112, an EI shaped magnetic material is placed for each inductor so that the turns of each inductor are wounded around a central leg of a respective EI shaped magnetic material and each part goes through each aperture of the respective EI shaped magnetic material.
- At step S113, the filtering device is connected by connecting respectively a first terminal of each inductor to one output of the power converter and by connecting one terminal of the conductive material to the second terminals of the inductors.

Naturally, many modifications can be made to the embodiments of the invention described above without departing from the scope of the present invention.

## Claims

1. A multiphase system comprising a power converter having at least two legs and a filtering device connected to the at least two legs of the power converter, the filtering device being composed of at least two inductors, **characterized in that** the each inductor is composed of turns wounded around a central leg of a respective EI shaped magnetic, each inductor is disposed in at least one printed circuit board that comprises connections of the inductors and **in that** the filtering device further comprises a conductive material composed of at least two parts, each part goes through each aperture of a respective EI shaped magnetic material, a first terminal of each inductor being respectively connected at one leg of the power converter and one terminal of the conductive material is connected to the second terminals of the inductors.

2. The multiphase system according to claim 1, **characterized in that** the filtering device comprises one printed circuit board which comprises the inductors and the conducting material.

3. The multiphase system according to claim 1, **characterized in that** the printed circuit board further comprises plural conducting layers on which the windings of the inductors and the conducting material are etched.

4. The multiphase system according to claim 3, **characterized in that** the printed circuit board further comprises a laminated layer of soft magnetic material between the conducting layer or layers on which the inductors are etched and the conducting layer or layers on which the conducting material is etched.

5. The multiphase system according to claim 1, **characterized in that** the filtering device comprises plural printed circuit boards, a first printed circuit board comprises the inductors and a second first printed circuit board comprises the conducting material.

6. A method for manufacturing a multiphase system comprising a power converter having at least two legs and a filtering device connected to the at least two legs of the power converter, the filtering device being composed of at least two inductors, **characterized in that** the method comprises the steps of:
- disposing the inductors turns on a least one printed circuit board,
- disposing a conducting material, the conducting material being composed of at least two parts,
- disposing for each inductor an EI shaped magnetic material so that the turns of each inductor are wounded around a central leg of a respective EI shaped magnetic material and each part goes through each aperture of the respective EI shaped magnetic material,
- connecting the filtering device by connecting respectively a first terminal of each inductor to one output of the power converter and connecting one terminal of the conductive material to the second terminals of the inductors.
